(19) Europäisches Patentamt / European Patent Office / Office européen des brevets

(11) **EP 3 684 739 B1**

(12) **FASCICULE DE BREVET EUROPEEN**

(45) Date de publication et mention
de la délivrance du brevet:
**18.08.2021 Bulletin 2021/33**

(21) Numéro de dépôt: **18769194.4**

(22) Date de dépôt: **18.09.2018**

(51) Int Cl.:
*C04B 35/10* (2006.01)     *C04B 35/185* (2006.01)
*C04B 35/48* (2006.01)     *C04B 38/10* (2006.01)
*F27D 1/00* (2006.01)

(86) Numéro de dépôt international:
**PCT/EP2018/075244**

(87) Numéro de publication internationale:
**WO 2019/057729 (28.03.2019 Gazette 2019/13)**

(54) **MOUSSE CERAMIQUE**

KERAMIKSCHAUM

CERAMIC FOAM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.09.2017 FR 1758675**

(43) Date de publication de la demande:
**29.07.2020 Bulletin 2020/31**

(73) Titulaire: **SAINT-GOBAIN CENTRE DE
RECHERCHES
ET D'ETUDES EUROPEEN
92400 Courbevoie (FR)**

(72) Inventeurs:
• **SAN-MIGUEL, Laurie
  84210 Althen-de-Paluds (FR)**
• **MILLOT, Yannick
  84250 Le Thor (FR)**

(74) Mandataire: **Nony
11 rue Saint-Georges
75009 Paris (FR)**

(56) Documents cités:
**WO-A1-2013/011436     WO-A1-2014/020522
CN-A- 105 837 241     GB-A- 2 469 608**

**Description**

**Domaine technique**

L'invention se rapporte à une mousse céramique réfractaire et à un procédé de fabrication d'une telle mousse céramique, notamment utilisable comme isolant thermique dans un environnement dont la température peut atteindre 1200°C.

**Etat de la technique**

Une mousse céramique est une structure alvéolaire frittée, chaque alvéole, ou « cellule », étant délimitée par une paroi comprenant, de préférence constituée en un matériau céramique. Les mousses céramiques présentent classiquement une porosité totale typiquement comprise entre 65 et 95% en volume.

Il existe plusieurs procédés de fabrication de mousses céramiques.

Le plus simple de ces procédés comprend l'addition d'un agent porogène dans une barbotine céramique ou un mélange à presser. La barbotine ou le mélange sont mis en forme de manière à réaliser une préforme. La préforme subit un cycle de cuisson qui permet de brûler l'agent porogène. En brûlant, l'agent porogène laisse place à un pore. Un tel procédé est par exemple décrit dans le brevet EP1140731 B1.

Un autre procédé comprend la réplication d'une mousse en polymère, par exemple en polyuréthane. Plus précisément, la mousse polymère est recouverte d'une suspension comportant des particules céramiques et subit ensuite un cycle de cuisson qui permet de brûler la mousse polyuréthane et de fritter les particules. La mousse céramique obtenue présente ainsi une structure induite par la mousse polymère de départ. Un tel procédé est par exemple décrit dans US 4 024 212 ou WO00/69542.

Une mousse céramique peut être encore fabriquée à partir d'une émulsion d'huile ou de paraffine formant des gouttelettes. Des particules céramiques sont déposées sur les gouttelettes. L'ensemble est ensuite séché, délianté et fritté. Un tel procédé est par exemple décrit dans l'article "Production of porous materials through consolidation of pickering emulsions" par Bram Neirinck et al, dans Advanced engineering materials 2007, 9, n°1-2.

Un autre procédé comprend la création de pores au moyen d'un gaz obtenu par réaction chimique entre différents additifs ajoutés à une barbotine de particules céramiques. Un tel procédé est par exemple décrit dans US 5 643 512 ou US 5 705 448.

Un autre procédé, dit « de moussage direct » consiste à introduire un gaz dans une barbotine, soit par brassage, soit par injection de gaz.

Une mousse céramique peut être encore obtenue par agitation d'une barbotine céramique comportant un gélifiant. Un tel procédé est par exemple décrit dans EP 1 329 439 A1.

Ce procédé comporte les étapes suivantes :

1) Préparation d'une suspension d'une poudre céramique à l'aide d'un dispersant,
2) Préparation d'une solution contenant un biogel, encore appelé « hydrocolloïde », et maintien à une température supérieure à la température de gélification de la solution,
3) Mélange de ladite suspension et de ladite solution, avec ajout d'un agent moussant, jusqu'à obtention d'une mousse intermédiaire, la température étant maintenue suffisamment élevée pour éviter la gélification du biogel,
4) Coulage de la mousse intermédiaire dans un moule,
5) Refroidissement jusqu'à gélification du biogel,
6) Séchage, calcination et frittage de manière à obtenir une mousse céramique.

L'utilisation d'un biogel pour consolider la mousse intermédiaire permet avantageusement d'éviter les problèmes de toxicité observés avec certains procédés de fabrication, notamment par réplication.

On connait aussi de WO 2006 018537 un procédé de fabrication permettant de fabriquer une mousse céramique de densité homogène et ayant des dimensions supérieures ou égales à 60 mm, ledit procédé comprenant les étapes successives suivantes :

a) Préparation d'un mélange M contenant une poudre céramique en suspension, au moins un agent gélifiant, un agent stabilisant et au moins un agent moussant, à une température de mélange supérieure à la température de gélification dudit agent gélifiant,
b) Cisaillement dudit mélange M à une température de moussage supérieure à ladite température de gélification, jusqu'à obtention d'une mousse intermédiaire,
c) Gélification de ladite mousse intermédiaire par refroidissement dudit mélange M à une température inférieure à la température de gélification dudit agent gélifiant,

d) Séchage de la mousse intermédiaire gélifiée de manière à obtenir une préforme,

e) Frittage de la préforme de manière à obtenir une mousse céramique.

EP 1 945 593 A1 décrit un procédé similaire à un procédé de moussage direct, comprenant l'agitation d'un mélange comportant 25 à 35% en masse d'eau, 40 à 60% en masse d'une poudre de grains fins réfractaires, 7 à 24% en masse d'un agent porogène organique, 1,5 à 4% en masse d'un agent moussant, 0,1 à 0,4% en masse d'un agent stabilisant et un hydroxyde d'un métal réfractaire tel qu'Al, Mg ou Zr, typiquement en une quantité comprise entre 2 et 10% en masse. L'exemple 3 décrit en particulier une mousse céramique comportant 57% en masse d'alumine (Corindon) et 43% de mullite ($3Al_2O_3$-$2SiO_2$). La transformation des précurseurs hydroxydes lors de la cuisson, typiquement entre 300 et 700°C, peut cependant causer des défauts structuraux sur des mousses céramiques présentant une épaisseur supérieure à 50 mm.

US 2009 197756 et US 8044105 B2 ont proposé de stabiliser une mousse intermédiaire obtenue par agitation mécanique et gélification en ajoutant à la suspension aqueuse initiale une protéine de type albumine associée à un aldéhyde. L'exemple 1 met en œuvre une suspension comportant des précurseurs et des agents de frittage pour obtenir, après cuisson, une mousse céramique de mullite.

CN105837241 décrit enfin une mousse céramique destinée à la filtration de métal en fusion et constituée d'un matériau comprenant de la mullite (20 - 45% en masse), du corindon (0,5 - 10% en masse), de la zircone (30 - 75% en masse), et une phase vitreuse (0,1 - 5% en masse). Une formulation préférée de mélange de départ est en masse, 20 à 60%, de manière plus préférée 25 à 45% d'une poudre de zircone ($ZrO_2$) ; 20 à 45%, de manière plus préférée 25 à 40% d'une poudre d'alumine ($Al_2O_3$) et 20 à 45%, de manière plus préférée 30 à 40% d'une poudre de zircon (silicate de zirconium $ZrSiO_4$).

En particulier pour une application comme isolant thermique de four, il existe un besoin permanent pour une mousse céramique présentant un module de rupture en flexion élevé entre 20°C et 1400°C, une porosité totale supérieure à 60%, une très bonne tenue au cyclage thermique et une conductivité thermique à 1200°C inférieure à 0,8 W/(m.K).

Il existe également un besoin pour un procédé de fabrication d'une telle mousse céramique qui soit simple à mettre en œuvre et permettent de fabriquer des mousses céramiques homogènes de formes variées et/ou présentant une épaisseur supérieure à 50 mm.

Le but de l'invention est de répondre à ces besoins.

## Résumé de l'invention

L'invention propose une mousse céramique frittée présentant une porosité totale supérieure à 60% en volume et la composition de phases suivante, en pourcentage massique sur la base des phases cristallisées :

- 25 à 55% de mullite ($3Al_2O_3$-$2SiO_2$),
- 20 à 65% de corindon ($Al_2O_3$ sous forme cristalline alpha),
- 10 à 40% de zircone ($ZrO_2$),

la mullite, le corindon et la zircone représentant ensemble plus de 80%, de préférence plus de 90%, de préférence plus de 95%, de préférence plus de 98% de la masse des phases cristallisées.

Sans pouvoir l'expliquer théoriquement, les inventeurs ont observé qu'une telle composition de phases permet d'obtenir un module de rupture en flexion supérieur ou égal à 2 MPa entre 20°C et 1400°C, sans augmenter la conductivité thermique du matériau constituant la mousse céramique, ni dégrader la résistance au cyclage thermique ou aux chocs thermiques, voire en améliorant cette dernière propriété.

L'invention concerne également un procédé de fabrication d'une mousse céramique selon l'invention, ledit procédé comportant les étapes suivantes :

A. Préparation d'un premier mélange comportant, de préférence constitué d'un mélange :

- De particules d'oxydes réfractaires choisies de manière à obtenir, à l'issue de l'étape F., une mousse céramique selon l'invention, les particules d'oxydes réfractaires représentant plus de 50%, de préférence plus 60%, de préférence plus 70%, de préférence plus de 80% en masse du premier mélange ;
- d'un liquide contenant un agent mouillant et/ou un dispersant ;

B. Indépendamment de l'étape A., préparation d'un deuxième mélange, comportant, de préférence constitué

- d'un agent gélifiant, de préférence de la gélatine ou un dérivé de gélatine,
- d'un agent moussant, et

- de préférence un plastifiant, de préférence la glycérine ou un dérivé de glycérine ;

C. Incorporation des premier et deuxième mélanges dans un réacteur thermostaté et moussage par agitation mécanique, de préférence pendant plus de 10 minutes, de manière préférée pendant 25 à 30 min, de manière à obtenir un mélange mousseux ;
D. Coulage du mélange mousseux dans un moule à une température inférieure à 40°C, de préférence à une température inférieure à 30°C ;
E. Séchage de la préforme, de préférence pendant une durée inférieure à 150 heures, et de préférence à une température inférieure à 28°C, afin d'obtenir une préforme présentant une teneur résiduelle en eau inférieure à 1,5%, de préférence inférieure à 1% ;
F. Frittage sous atmosphère oxydante, de préférence sous air, de préférence à une température supérieure à 1600°C et de préférence inférieure à 1750°C, pendant une durée de préférence supérieure à 2 heures, de préférence pendant au moins 4 heures, de préférence supérieure à 6 heures.

L'invention concerne enfin un four, en particulier

- un four de cuisson de pièces réfractaires ou de pièces céramiques, en particulier en porcelaine, et

un four de traitement thermique de matériaux inorganiques, en particulier de métaux, verres ou céramiques, à une température supérieure ou égale à 1200°C, par exemple un four de cuisson, de frittage ou de recuisson, dont le revêtement comprend un isolant thermique constitué d'une mousse céramique selon l'invention ou fabriquée suivant un procédé selon l'invention. Avantageusement, un tel revêtement présente une bonne résistance aux chocs thermiques.

L'invention concerne en particulier un élément d'un tel four choisi parmi une paroi, une voute, un support pour l'accueil et la protection d'éléments chauffants du four, une sole d'un wagon, en particulier d'un wagon pour un four intermittent, par exemple un four « cellule », ou un four continu, par exemple un four « tunnel », plus particulièrement une sole d'un wagon comportant un support de cuisson, notamment pour supporter des pièces céramiques.

## Brève description des figures

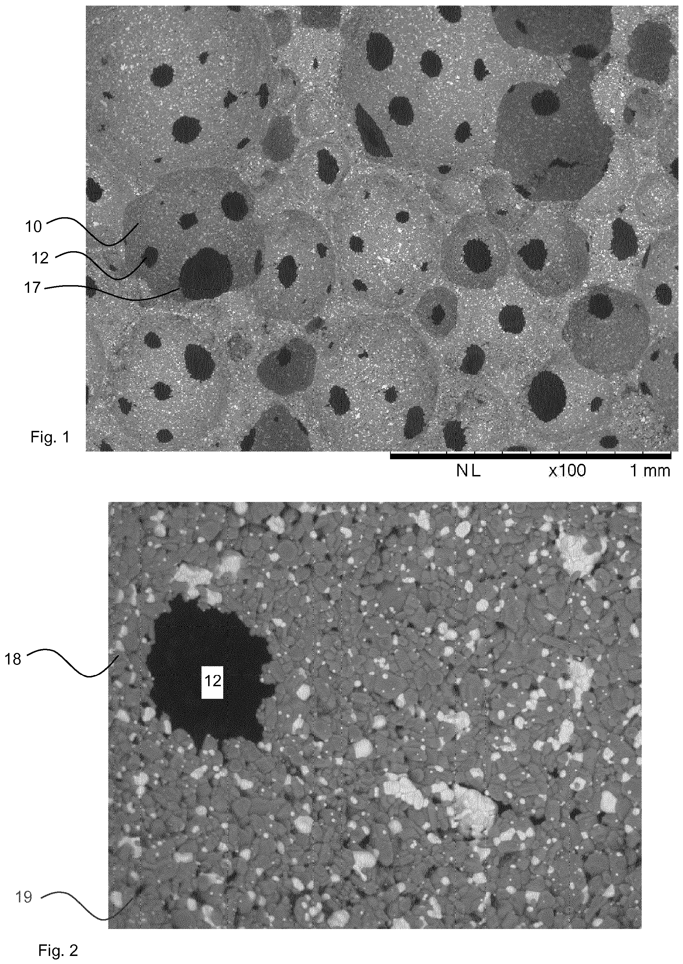

D'autres caractéristiques et avantages de la présente invention apparaîtront à la lecture de la description qui va suivre et à l'examen du dessin annexé dans lequel les figures 1 et 2 montrent, à différents grossissements, des images obtenues au microscope électronique à balayage (MEB) sur des échantillons d'une mousse céramique selon l'invention.

Dans les différentes figures, des références identiques sont utilisées pour désigner des objets identiques ou analogues.

## Définitions

Par « préforme », on entend classiquement un ensemble de particules liées au moyen d'un liant, généralement temporaire, et dont la microstructure va évoluer lors du frittage. Une préforme peut notamment présenter la forme d'un bloc (notamment la forme d'un bloc parallélépipédique, d'une plaque, d'une tuile, d'un tube, de forme concave ou convexe) ou d'une couche (sur un substrat). La préforme peut également constituer un support sur lequel est déposée une couche d'un autre matériau.

On appelle « frittage », la consolidation par traitement thermique à plus de 1100°C d'une préforme, avec éventuellement une fusion, partielle ou totale, de certains de ses constituants (mais pas de tous ses constituants, de sorte que la préforme n'est pas transformée en une masse liquide).

Les « grains » d'un produit fritté sont constitués des particules de la préforme agglomérées par le frittage.

La taille des particules d'une poudre est évaluée classiquement par une caractérisation de distribution granulométrique réalisée avec un granulomètre laser, par exemple, un Partica LA-950 V2 de la société HORIBA. On appelle « taille médiane » d'une poudre, généralement notée $D_{50}$, la taille divisant les particules de cette poudre en première et deuxième populations égales en masse, ces première et deuxième populations ne comportant que des particules présentant une taille supérieure ou égale, ou inférieure respectivement, à la taille médiane. La taille médiane peut par exemple être mesurée à l'aide d'un granulomètre laser.

On appelle « taille moyenne » des grains d'un produit fritté, la dimension mesurée selon une méthode de « *Mean Linear Intercept* ». Une méthode de mesure de ce type est décrite dans la norme ASTM E1382.

On appelle « taille d'un pore » sa dimension maximale. Dans les mousses céramiques de l'invention, les macropores ont une forme quasi-sphérique et la taille est dans ce cas le diamètre équivalent, c'est-à-dire le diamètre d'un disque de même aire. La taille des pores se mesure par analyse d'images de la surface des mousses céramiques.

Par « matériau céramique », on entend un matériau qui n'est ni organique, ni métallique.

Par « oxyde réfractaire », on entend un oxyde présentant une température de fusion supérieure à 1500°C. Cette définition est communément employée par l'homme du métier et citée dans « Matériaux réfractaires et céramiques techniques (éléments de céramurgie et de technologie) », G. Aliprandi, éditions Septima Paris, 1979.

Dans un souci de clarté, on utilise les formules chimiques des oxydes pour exclusivement désigner les teneurs de ces oxydes dans une composition. Par exemple, « $ZrO_2$ », « $HfO_2$ », « $SiO_2$ » ou « $Al_2O_3$ » désignent les teneurs de ces oxydes dans la composition et « zircone », « hafnie », « silice » et « alumine » sont exclusivement utilisés pour désigner des phases cristallisées de ces oxydes constituées de $ZrO_2$, $HfO_2$, $SiO_2$ et $Al_2O_3$, respectivement. Ces oxydes peuvent cependant être également présents sous d'autres phases, en particulier, par exemple, $SiO_2$ et $Al_2O_3$ peuvent être présents sous forme de mullite.

On entend par « silice libre » de la silice non combinée à un autre oxyde sous forme d'un composé cristallisé tel que, par exemple, la mullite.

Sauf mention contraire, tous les pourcentages relatifs à la composition des phases d'une mousse céramique sont des pourcentages massiques sur la base de l'ensemble des phases cristallisées.

$HfO_2$ n'est pas chimiquement dissociable de $ZrO_2$. Dans la composition chimique d'un produit comportant de l'oxyde de zirconium, « $ZrO_2$ » ou « $ZrO_2+HfO_2$ » désignent donc la teneur totale de ces deux oxydes. Selon la présente invention, $HfO_2$ n'est pas ajouté volontairement dans la charge de départ. $HfO_2$ ne désigne donc que les traces d'oxyde d'hafnium, cet oxyde étant toujours naturellement présent dans les sources d'oxyde de zirconium à des teneurs généralement inférieures à 2%. Par souci de clarté, on peut donc désigner indifféremment la teneur en oxyde de zirconium et en traces d'oxyde d'hafnium par $ZrO_2+HfO_2$ ou par $ZrO_2$.

Par « zircone au moins partiellement stabilisée », on entend une zircone partiellement stabilisée ou une zircone stabilisée. Une zircone partiellement stabilisée est une zircone comportant de la zircone monoclinique, et présentant moins de 50% de sa masse sous ladite phase cristallographique monoclinique.

Par « particule de mullite-zircone », on entend une particule réfractaire obtenue par frittage ou par fusion et dont l'analyse chimique révèle la présence majoritaire (plus de 50% en masse) d'alumine ($Al_2O_3$), de silice ($SiO_2$) et de zircone ($ZrO_2$), la silice et l'alumine étant présentes essentiellement sous la forme $2SiO_2$ - $3Al_2O_3$ (mullite) afin de garantir une bonne réfractarité, une bonne tenue aux chocs thermiques et inertie chimique. De préférence, une particule de mullite-zircone comporte plus de 90%, de préférence plus de 95% en masse de d'alumine + silice + zircone.

Par « particule de mullite », on entend une particule réfractaire obtenue par frittage ou par fusion et dont l'analyse chimique révèle la présence majoritaire d'alumine ($Al_2O_3$) et de silice ($SiO_2$), la silice et l'alumine étant présentes majoritairement sous la forme cristalline de mullite. De préférence, une particule de mullite comporte plus de 90% de mullite, de préférence plus de 95% en masse de mullite. Dans un mode de réalisation, une particule de mullite comporte moins de 1% de zircone, en pourcentage massique.

Par « particule d'alumine-zircone », on entend des particules obtenues par électrofusion et pouvant contenir des inclusions, en particulier des inclusions d'oxyde de titane.

Par « grain d'alumine-zircone-silice », on entend un grain obtenu par électrofusion et composé majoritairement, c'est-à-dire pour plus de 50% de sa masse, des 3 oxydes $Al_2O_3$, $SiO_2$ et $ZrO_2$.

Sauf mention contraire, tous les pourcentages relatifs à la composition d'un produit ou relatifs à une charge de départ sont des pourcentages massiques sur la base des oxydes, comme cela est classique dans les produits réfractaires. Dans une composition chimique, les teneurs en oxydes se rapportent aux teneurs globales pour chacun des éléments chimiques correspondants, exprimées sous la forme de l'oxyde le plus stable, selon la convention habituelle de l'industrie.

Par « matière sèche », on entend classiquement la matière inorganique, minérale et/ou métallique, et non hydratée.

Les différentes caractéristiques d'un produit selon l'invention peuvent être déterminées par les méthodes de caractérisation utilisées pour les exemples ci-dessous.

Sauf mention contraire, toutes les moyennes sont des moyennes arithmétiques.

Le signe « + » séparant deux oxydes indique une somme des teneurs de ces oxydes. Les deux constituants reliés par ce signe ne sont donc pas nécessairement simultanément présents.

Sauf indication contraire, les particules « en » un constituant, ou « d'un » constituant, par exemple les particules « d'alumine » ou « en alumine » sont classiquement les particules comportant plus de 95% de ce constituant, en pourcentage massique.

Les verbes « comporter », « présenter » ou « comprendre » doivent être interprétés de manière large, non limitative, sauf indication contraire.

**Description détaillée**

Composition de phases

La teneur en mullite est de préférence supérieure à 35%, de préférence supérieure à 40%, voire supérieure à 45%, et/ou inférieure à 55%, de préférence inférieure à 50%.
La teneur en corindon est de préférence supérieure à 25%, de préférence supérieure à 30%, et/ou inférieure à 60%, de préférence inférieure à 55%, de préférence inférieure à 50%, de préférence inférieure à 40%.
La teneur en zircone est de préférence supérieure à 15%, de préférence supérieure à 20%, et/ou inférieure à 35%, de préférence inférieure à 30%.
La mousse céramique comporte de préférence :

- 40 à 60%, de préférence de 40 à 55% de mullite,
- 30 à 40% de corindon,
- 15 à 30% de zircone.

De préférence encore, plus de 40%, de préférence plus de 60%, de préférence plus de 80%, de préférence plus de 90%, de préférence sensiblement 100% de la zircone, en pourcentage massique, est sous forme cristalline monoclinique.
La zircone qui n'est pas sous forme cristalline monoclinique est de préférence stabilisée avec de l'yttrium, et/ou du cérium, et/ou du calcium et/ou du magnésium.
La phase vitreuse ou « amorphe » représente de préférence moins de 5% en masse de la mousse céramique, de préférence la mousse ne comporte pas de phase vitreuse détectable par analyse à la diffraction aux rayons X.
La composition des phases a été obtenue par Diffraction des Rayons X. Les diffractogrammes des phases cristallisées peuvent être collectés avec un diffractomètre de type D5000 et les données ont été analysées qualitativement avec le logiciel EVA et la base de données ICDD2016.

Composition chimique

De préférence, la mousse céramique présente la composition chimique suivante, en pourcentages massiques sur la base des oxydes :

- $Al_2O_3$ : 50 à 80% ;
- $SiO_2$ : 5 à 25% ;
- $ZrO_2$ : 10 à 40% ;
- $Fe_2O_3$ + $MnO$ + $B_2O_3$ + $Na_2O$ + $K_2O$ : moins de 2%, de préférence moins de 1% ;
- Somme des oxydes de calcium, magnésium, yttrium et cérium : moins de 10%, de préférence moins de 5%, de préférence moins de 3% ;
- Autres oxydes réfractaires : complément à 100%.

Une somme d'oxydes, par exemple « $Fe_2O_3$ + $MnO$ + $B_2O_3$ + $Na_2O$ + $K_2O$ », désigne la teneur totale de ces oxydes, mais n'implique pas qu'ils soient tous présents.
Bien entendu, la composition de phases d'une mousse céramique selon l'invention implique des limitations sur la composition, et en particulier sur la teneur totale en $Al_2O_3$ + $SiO_2$ + $ZrO_2$.
De préférence, la teneur en $Al_2O_3$ est supérieure à 55%, de préférence supérieure à 60%, et/ou inférieure à 70%.
De préférence, la teneur en $SiO_2$ est supérieure à 7%, de préférence supérieure à 10% et/ou inférieure à 20%.
De préférence, la teneur en $ZrO_2$ est supérieure à 15%, et/ou inférieure à 30%, de préférence inférieure à 25%.
De préférence, la teneur totale $Al_2O_3$ + $SiO_2$ + $ZrO_2$ est supérieure à 90%, de préférence supérieure à 95%, de préférence supérieure à 98%, en pourcentages massiques sur la base des oxydes.
Le rapport massique $SiO_2/Al_2O_3$ est de préférence compris entre 9 et 30, de manière préférée entre 10 et 25.
Le rapport massique $ZrO_2/Al_2O_3$ est de préférence compris entre 15 et 80, de préférence entre 20 et 50, de manière plus préférée entre 25 et 40.
De préférence, la teneur en $TiO_2$, qui fait partie des « autres oxydes », est inférieure à 1%, voire inférieure à 0,5%.
Les « autres oxydes » sont les oxydes autres que $Al_2O_3$, $SiO_2$, $ZrO_2$, $Fe_2O_3$, $MnO$, $B_2O_3$, $Na_2O$, $K_2O$, $CaO$, $MgO$, $Y_2O_3$ et $Ce_2O_3$.
De préférence, la mousse céramique comporte moins de 1% d'oxyde de chrome $Cr_2O_3$, qui fait partie des « autres oxydes ». De préférence elle ne comporte pas d'oxyde de chrome.
Les « autres oxydes » représentent de préférence moins de 20%, de préférence moins de 15%, de préférence moins de 8 %, voire moins de 5%, moins 3,0%, moins de 2,0%, moins de 1,0%, moins de 0,5%. Dans un mode de réalisation, les « autres oxydes » sont des impuretés.

Les oxydes représentent plus de 90%, de préférence plus de 95%, de préférence plus de 99%, de préférence sensiblement 100% de la masse de la mousse céramique.

La teneur massique des oxydes précités est typiquement déterminée par fluorescence aux rayons X et/ou par ICP (Plasma à couplage inductif).

La teneur en matières organiques, mesurée classiquement par « perte au feu » à 750°C pendant 30 minutes sous air, est de préférence inférieure à 0,5%, voire inférieure à 0,1%, en pourcentage massique sur la base de la mousse.

Microstructure

La mousse céramique présente une pluralité de cellules 10 (voir figure 1), la majorité de ces cellules étant connectées à d'autres cellules adjacentes par des fenêtres 12. Une cellule à la surface de la mousse céramique poreuse présente également généralement une ou plusieurs ouvertures vers l'extérieur.

Les parois 17 délimitant les cellules 10, constituées de particules agglomérées par frittage, présentent une porosité dite « intergranulaire ». Elles sont en effet formées par agglomération de particules 18, cette agglomération laissant subsister des interstices 19 ou « pores intergranulaires », entre les particules 18.

La porosité intergranulaire peut être modifiée en fonction de la taille des particules de la poudre céramique utilisée. La taille moyenne des pores intergranulaires est de préférence inférieure à 10 $\mu$m La porosité intergranulaire, de préférence supérieure à 1%, et/ou inférieure à 10%.

Les volumes délimités par les parois 17 définissent une porosité dite « macroporeuse ». La taille des pores cellulaires, ou « macropores », varie généralement entre 10 et 2000 $\mu$m. La taille moyenne des pores cellulaires est de préférence 10 à 100 fois supérieure à celle des pores intergranulaires, de préférence comprise entre 80 et 1000, de préférence entre 100 et 1000 micromètres, de préférence comprise entre 150 et 700 $\mu$m, de préférence entre 200 et 500 $\mu$m, de préférence d'environ 400 $\mu$m.

La porosité intergranulaire coexiste ainsi avec la macroporosité, la porosité totale étant la somme de la macroporosité, ou « porosité macroporeuse », et de la porosité intergranulaire. La macroporosité est donc formée par des volumes dont les limites ne sont pas la conséquence nécessaire d'une agglomération de grains, mais résultent d'un agencement particulier de ces grains et du procédé de moussage

La macroporosité comprend les volumes ou « pores » fermés, c'est-à-dire définis par des cellules non connectées avec d'autres cellules, et les volumes ou « pores » ouverts, c'est-à-dire interconnectés à d'autres pores. Une mousse céramique selon l'invention présente une porosité totale, égale à la somme de la porosité intergranulaire, de la macroporosité ouverte et de la macroporosité fermée très élevée. La porosité totale est typiquement comprise entre 65 et 95% en volume.

La porosité totale est supérieure à 60%, de préférence supérieure à 70%, supérieure à 75%, supérieure à 78% et/ou inférieure à 90%, de préférence inférieure à 85%, en volume.

La mousse céramique présente une macroporosité totale (somme des macroporosités ouverte et fermée) supérieure à 70%, de préférence supérieure à 75%, voire supérieure à 80%, et/ou inférieure à 95%, voire inférieure à 90%, en pourcentages volumiques.

La porosité ouverte représente de préférence plus de 60%, de préférence plus de 70%, de préférence plus de 80%, de préférence plus de 90%, de préférence plus de 95% de la macroporosité.

L'épaisseur moyenne des parois est typiquement comprise entre 30 et 300 micromètres, de préférence entre 45 et 200 micromètres, de préférence entre 45 et 100 micromètres.

Les fenêtres 12 d'interconnexion présentent de préférence, en moyenne, un diamètre équivalent supérieur à 1/100 et/ou inférieur à 1/3 du diamètre équivalent moyen des cellules 10.

La taille moyenne des grains est de préférence supérieure ou égale à 5 micromètres et/ou inférieure à 200 micromètres, de préférence inférieure à 100 micromètres.

Les grains sont de préférence, pour plus de 90%, de préférence plus de 95%, de préférence sensiblement 100% en nombre, des grains d'alumine, en particulier d'alumine tabulaire, et/ou des grains de mullite (représentés en gris sur la figure 2), et/ou des grains de zircone (représentés en blanc sur la figure 2), et/ou des grains de mullite-zircone, et/ou des grains d'alumine-zircone, et/ou des grains d'alumine-zircone-silice.

Les grains sont des grains frittés ou fondus, notamment des grains électrofondus, par exemple d'alumine-zircone ou d'alumine-zircone-silice.

De préférence les grains comportent moins de 5%, de préférence moins de 2%, de préférence moins de 1%, de préférence sensiblement pas de silice « libre »

Selon un mode de réalisation, la zircone peut être présente sous forme de grains de zircone ou sous forme de grains de mullite-zircone frittés ou électrofondus.

Ces microstructures peuvent être observées au moyen d'un Microscope Electronique à Balayage (MEB).

Procédé de fabrication

Une mousse céramique selon l'invention peut être en particulier fabriquée suivant les étapes a) à e) ci-dessus, en particulier suivant un procédé décrit dans EP 1 329 439.

De préférence, on fabrique la mousse céramique suivant un procédé comportant les étapes A. à F. ci-dessus.

Ce procédé est un procédé qui est conventionnel, sauf en ce qui concerne les étapes A. et B. Avantageusement, cette différence permet d'obtenir une grande homogénéité, même en présence de gélifiant.

A l'étape A., le premier mélange est de préférence préparé à une température comprise entre 40 et 70°C, de préférence entre 50 et 60°C, de préférence sous agitation mécanique continue, de préférence pendant plus de 30 minutes, de préférence plus de 60 minutes et, de préférence moins de 90 minutes.

La quantité massique de dispersant est de préférence comprise entre 0,1 et 5% par rapport à la matière sèche du premier mélange.

Dans un mode de réalisation, le premier mélange ne comporte pas d'agent mouillant.

Les agents mouillants et dispersants peuvent être conventionnels.

La quantité d'eau du premier mélange, de préférence désionisée, est comprise entre 10 et 25%, de manière plus préférée entre 12 et 20%, voire entre 13 et 18% par rapport à la matière sèche.

A l'étape B., le deuxième mélange est de préférence préparé à une température entre 40 et 70°C, de préférence entre 50 et 65°C, sous agitation mécanique continue, pendant 10 minutes, voire 20 minutes, et de préférence moins de 30 minutes et moins de 1 heure.

La quantité d'eau du deuxième mélange, de préférence désionisée, est de préférence comprise entre 5 et 15% par rapport à la matière sèche.

A l'étape C., l'agitation mécanique est de préférence poursuivie jusqu'à obtention d'un « ratio d'expansion » ou taux de foisonnement supérieur à 2, supérieur à 4, voire supérieur à 5.

A l'étape D., les faces du moule en contact du mélange mousseux sont de préférence en bakélite ou en téflon. De préférence, la préforme est démoulée avant séchage.

De préférence, le moule est démontable. Un agent de démoulage peut être utilisé pour faciliter l'opération de démoulage.

En variante, il est possible d'introduire l'air, ou plus généralement un gaz, dans le deuxième mélange avant l'étape C. Ainsi, on amène le deuxième mélange de gélatine et d'agent moussant déjà « moussé » avant de le mélanger avec le premier mélange comportant des particules minérales. Une telle variante est décrite par la publication « *foam sprayed porous insulating refractories* » de V.R.Salvini, A.P. Luz et V.C. Pandolfelli Refractories Worldforum 4 (2012) [4].

En variante, il est possible d'utiliser un mélangeur foisonneur, de préférence du type « rotor-stator », dans lequel les premier et deuxième mélanges sont ajoutés successivement ou simultanément, de l'air, ou plus généralement un gaz, étant de préférence introduit dans la charge (premier mélange + deuxième mélange) du mélangeur foisonneur.

## Exemples

Les exemples non limitatifs suivants sont donnés dans le but d'illustrer l'invention.

Fabrication

Dans les exemples, les matières premières employées ont été choisies parmi :

- une poudre de Corindon $Al_2O_3$ de pureté supérieure à 99,5%, les particules présentant une taille inférieure à 0,2 mm ;
- une poudre de Corindon $Al_2O_3$ de pureté supérieure à 99,5%, les particules présentant une taille inférieure à 50 micromètres ;
- un mélange d'alumines calcinées et réactives, contenant plus de 99% $Al_2O_3$ et dont la taille médiane est comprise entre 0,1 et 7 micromètres ;
- une poudre de particules de mullite, la poudre présentant une taille médiane comprise entre 7 et 15 micromètres et présentant la composition suivante :

  - $Al_2O_3$ : 72 %
  - SiO2 : 26 %

- une poudre de particules de mullite-zircone, la poudre présentant une taille médiane comprise entre 7 et 15 micromètres et présentant la composition suivante :

  - $Al_2O_3$ : 45%

- SiO$_2$ : 19%
- ZrO$_2$: 35%

- une poudre de zircone CC10, contenant plus de 99% de ZrO$_2$, de taille médiane D$_{50}$ de 3 à 5 micromètres, fournie par la société SEPR ;
- du sable de zircon, de pureté ZrO$_2$ + SiO$_2$ supérieure à 98%, et de taille médiane D$_{50}$ de 4 à 6 micromètres ;
- du sable de quartz, de pureté supérieure à 98%, et de taille médiane D$_{50}$ d'environ 3 micromètres ;
- de la fumée de silice ERQ4, de taille médiane D$_{50}$ de 0,5 micromètres, fournie par la société SEPR ;
- de la gélatine de qualité 280 bloom - 20 mesh ;
- de la glycérine de pureté supérieure ou égale à 99,7% ;
- un agent moussant à base de sulfonate d'alcool gras ;
- un dispersant à base de polyacrylate d'ammonium ;
- une poudre d'oxyde d'Yttrium de pureté supérieure à 99%, ayant une taille médiane d'environ 1,6 micromètres.

Le tableau 1 suivant résume les compositions des matières premières minérales des charges de départ.

Tableau 1

| | Exemples comparatifs | | | | | | | | | | | Selon l'invention | | | | |
|---|---|---|---|---|---|---|---|---|---|---|---|---|---|---|---|---|
| | C1 | C2 | C3 | C4 | C5 | C6 | C7 | C8 | C9 | C10 | C11 | 1 | 2 | 3 | 4 | 5 |
| Poudre de corindon 0-0,2mm | 39,1 | 39,1 | 39,1 | 39,1 | 0 | 39,1 | 39,1 | 5 | 24 | 14 | 5 | 0 | 0 | 0 | 0 | 0 |
| Poudre de corindon 0-50 micromètres | 8 | 8 | 8 | 8 | 8 | 8 | 8 | 7 | 5 | 3 | 2 | 8 | 8 | 8 | 8 | 7 |
| Poudre de Mullite | 0 | 0 | 0 | 0 | 0 | 0 | 0 | 8 | 18 | 2 | 21 | 0 | 0 | 0 | 0 | 0 |
| Poudre de Mullite-Zircone | 0 | 0 | 0 | 0 | 39,1 | 0 | 0 | 27,1 | 0 | 28 | 19 | 39,1 | 39,1 | 39,1 | 39,1 | 39,1 |
| Mélange d'alumines calcinées et réactives | 52,9 | 46,9 | 39,9 | 39,9 | 17,9 | 42,4 | 37,9 | 17.9 | 32 | 17.9 | 24 | 52,9 | 39,9 | 39,9 | 39,9 | 39,9 |
| Sable de Zircon | 0 | 0 | 0 | 11 | 0 | 10,5 | 15 | 0 | 0 | 5 | 0 | 0 | 11 | 0 | 11 | 11 |
| Zircone CC10 | 0 | 0 | 7 | 0 | 29 | 0 | 0 | 29 | 21 | 30.1 | 23 | 0 | 0 | 7 | 0 | 0 |
| Sable de Quartz | 0 | 0 | 4 | 1 | 4 | 0 | 0 | 4 | 0 | 0 | 4 | 0 | 1 | 4 | 1 | 1 |
| Fumée de silice ERQ4 | 0 | 6 | 2 | 1 | 2 | 0 | 0 | 2 | 0 | 0 | 2,0 | 0 | 1 | 2 | 1 | 1 |
| Oxyde d'Yttrium | 0 | 0 | 0 | 0 | 0 | 0 | 0 | 0 | 0 | 0 | 0 | 0 | 0 | 0 | 0 | 1 |
| Total | 100 | 100 | 100 | 100 | 100 | 100 | 100 | 100 | 100 | 100 | 100 | 100 | 100 | 100 | 100 | 100 |

Les mousses céramiques ont été fabriquées de la manière suivante :
Des premier et deuxième mélanges ont été préparés, chacun dans un bain thermostaté à une température inférieure à 65°C, en ajoutant :

- pour le premier mélange, le dispersant (+1 à +1,5% par rapport à la masse sèche), les poudres minérales et de l'eau déionisée (entre +14 %, et 16,2% par rapport à la masse sèche) ;
- pour le deuxième mélange, 10 à 12% d'eau désionisée, versée dans une cuve thermostatée, puis 3% de gélatine (gélifiant), 2% de glycérine (agent plastifiant) et enfin 1 à 2% d'agent moussant ont été ajoutés, en pourcentages par rapport à la matière sèche.

Chacun des premier et deuxième mélanges a été maintenu sous agitation mécanique constante, à l'aide d'un disperseur équipé d"un disque de dispersion, pendant un minimum de 20 minutes jusqu'à l'obtention d'une bonne dispersion.

Les premier et deuxième mélanges ont ensuite été mélangés, toujours dans une cuve thermostatée, pendant une durée supérieure à 20 minutes afin d'obtenir un mélange mousseux.

Le mélange mousseux a été coulé dans un moule en bakélite, à température ambiante (inférieure à 25°C), puis le contenu du moule a été séché pendant une durée de 150 heures à une température inférieure à 28°C, de manière à obtenir une préforme présentant les dimensions suivantes : 300mm x 300mm x 60mm.

La préforme a ensuite été frittée sous air pendant 6 heures à une température comprise entre 1600°C et 1750°C, de manière à obtenir une mousse céramique frittée.

Le tableau 2 fournit la composition chimique des mousses céramiques obtenues, en pourcentages massiques sur la base des oxydes.

Le tableau 3 fournit la composition de phases des mousses céramiques obtenues, en pourcentages massiques sur la base des phases cristallisées (qui représentent sensiblement 100% des phases présentes).

Caractérisation de propriétés

Chaque mousse céramique a été caractérisée de la manière suivante :
**Les mesures des valeurs de module d'élasticité dynamique** (MoE, « *Modulus of elasticity* » en anglais) sont déterminées à température ambiante (20°C), et après un choc thermique, suivant la norme ASTM C 1259, au moyen d'un appareil de mesure IMCE, RFDA system23. Le choc thermique consiste à soumettre un échantillon initialement à température ambiante, au traitement thermique consistant en une montée en température jusqu'à 1200°C, à une vitesse de 150°C/h, un maintien à cette température de palier pendant 3h30, puis une trempe à l'air, par convection naturelle. La valeur reportée est une moyenne obtenue sur trois échantillons présentant les dimensions suivantes $180*40*40$ mm$^3$.

**Les mesures des valeurs de module à rupture** (MoR, « *Modulus of rupture* » en anglais) sont effectuées à température ambiante (20°C), et après un choc thermique, selon la norme NF EN 843-1 ou ISO 14610, selon une configuration flexion 4 points. Le choc thermique consiste à soumettre un échantillon initialement à température ambiante, au traitement thermique consistant en une montée en température jusqu'à 1200°C, à une vitesse de 150°C/h, un maintien à cette température de palier pendant 3h30, puis une trempe à l'air, par convection naturelle. La valeur reportée est une moyenne obtenue sur trois échantillons présentant les dimensions suivantes $180*40*40$ mm$^3$.

**Les mesures des valeurs de module à rupture** (MoR) à 1400°C (MoR à chaud) sont effectuées selon la norme NF EN 993-7, selon une configuration flexion 3 points. La valeur reportée est une moyenne obtenue sur trois échantillons présentant les dimensions suivantes $150*25*25$ mm$^3$.

**La perte de MoR** (%) est égale à :

$$[\text{MoR(échantillon avant traitement thermique)} - \text{MoR (échantillon après traitement thermique)}] * 100 / [\text{MoR(échantillon avant traitement thermique)}]$$

Cette valeur est une indication de la résistance aux chocs thermiques.

**Le rapport (MoR (MPa) * 1000) / MoE (GPa)** est calculé à partir des valeurs de MoR et MoE mesurées sur des échantillons n'ayant pas subi le traitement thermique. Ce rapport est une indication de la résistance au gradient thermique.

**Le volume poreux** est calculé à partir de la mesure de densité géométrique et de de densité absolue selon la formule suivante :

$$\text{Volume poreux (\%)} = [\text{densité absolue} - \text{densité géométrique}] * 100 / \text{densité absolue}$$

Le volume poreux correspond sensiblement à la macroporosité.

La **densité géométrique** est mesurée suivant la norme ISO 5016:1997 ou EN 1094-4 et exprimée en g/cm$^3$. Elle est classiquement égale au rapport de la masse de l'échantillon divisée par le volume apparent.

La valeur de **densité absolue,** exprimée en g/cm$^3$, est classiquement mesurée en divisant la masse d'un échantillon par le volume de cet échantillon broyé de manière à sensiblement supprimer la porosité. En l'occurrence, le broyage est adapté de manière à réduire l'échantillon à une poudre dont les particules présentent une taille inférieure à 40 micromètres. La densité absolue peut être mesurée par pycnométrie hélium au moyen d'un appareil Accupyc II 1340 de chez Micromeritics. La norme utilisée par le fabricant est l'ASTM C604 - 02(2012).

**La porosité totale,** en pourcentage, est classiquement égal à 100 * (1 - le rapport de la densité géométrique divisée par la densité absolue).

**La conductivité thermique** est mesurée suivant la norme ISO 8894-2, à 1200°C. La valeur reportée est une moyenne obtenue à partir de cinq points de mesure.

Les résultats sont reportés dans le tableau 4 suivant.

Tableau 2

| | Exemples comparatifs | | | | | | | | | | | Selon l'invention | | | | |
|---|---|---|---|---|---|---|---|---|---|---|---|---|---|---|---|---|
| | C1 | C2 | C3 | C4 | C5 | C6 | C7 | C8 | C9 | C10 | C11 | 1 | 2 | 3 | 4 | 5 |
| % $Al_2O_3$ | 99,5 | 93,5 | 86,5 | 86,5 | 43,2 | 89,0 | 84,5 | 47,9 | 73,8 | 48,9 | 54,4 | 78,0 | 65,2 | 65,2 | 65,2 | 64,2 |
| % $SiO_2$ | <0,3 | 6,0 | 6,1 | 5,8 | 13,5 | 3,7 | 5,1 | 13,2 | 4,8 | 7,6 | 15,8 | 7,7 | 13,2 | 13,5 | 13,2 | 13,2 |
| % $ZrO_2$ | 0,0 | 0,0 | 7,0 | 7,3 | 42,6 | 6,9 | 9,9 | 38,2 | 20,8 | 42,8 | 28,9 | 13,7 | 21,0 | 20,7 | 21,0 | 21,0 |
| $Al_2O_3$ (%) + $SiO_2$ (%) + $ZrO_2$ (%) | 99,8 | 99,5 | 99,6 | 99,6 | 99,3 | 99,6 | 99,5 | 99,3 | 99,4 | 99,3 | 99,1 | 99,4 | 99,4 | 99,4 | 99,4 | 98,4 |
| % $Y_2O_3$ | <0,05 | <0,05 | <0,05 | <0,05 | <0,05 | <0,05 | <0,05 | <0,05 | <0,05 | <0,05 | <0,05 | <0,05 | <0,0 5 | <0,05 | <0,05 | 1,0 |
| Rapport $SiO_2$/ $Al_2O_3$ (*100) | <0,5 | 6,4 | 7,0 | 6,6 | 31,2 | 4,1 | 6,1 | 27,5 | 6,5 | 15,6 | 29 | 9,9 | 20,2 | 20,7 | 20,2 | 20,5 |
| Rapport $ZrO_2$/ $Al_2O_3$ (*100) | 0 | 0 | 8,1 | 8,4 | 98,5 | 7,8 | 11,7 | 79,7 | 28,1 | 87,6 | 53,1 | 17,5 | 32,2 | 31,8 | 32,2 | 32,7 |

Tableau 3

| | Exemples comparatifs | | | | | | | | | | | Selon l'invention | | | | |
|---|---|---|---|---|---|---|---|---|---|---|---|---|---|---|---|---|
| | C1 | C2 | C3 | C4 | C5 | C6 | C7 | C8 | C9 | C10 | C11 | 1 | 2 | 3 | 4 | 5 |
| % Mullite | 1,0 | 22,3 | 22,3 | 20,9 | 47,0 | 13,2 | 18,4 | 45,9 | 17,9 | 31 | 15 | 25,8 | 45,7 | 47,1 | 45,7 | 45,7 |
| % Corindon | 99,0 | 77,7 | 70,7 | 71,7 | 10,0 | 79,7 | 71,5 | 14,9 | 61,2 | 26 | 55 | 60,3 | 33,0 | 32,0 | 33,0 | 32,0 |
| % Zircone | 0,0 | <0,1 | 7,0 | 7,4 | 42,7 | 7,1 | 10,1 | 38,2 | 20,9 | 43,0 | 30 | 13,7 | 21,1 | 20,7 | 21,1 | 21,1 |

Tableau 4

| | Exemples comparatifs | | | | | | | | | | | Selon l'invention | | | | |
|---|---|---|---|---|---|---|---|---|---|---|---|---|---|---|---|---|
| | C1 | C2 | C3 | C4 | C5 | C6 | C7 | C8 | C9 | C10 | C11 | 1 | 2 | 3 | 4 | 5 |
| Densité géométrique (g/cm$^3$) | 0,70 | 0,70 | 0,69 | 0,67 | 0,81 | 0,43 | 0,42 | 0,83 | 0,75 | 0,81 | 0,73 | 0,82 | 0,78 | 0,70 | 0,52 | 0,81 |
| Densité absolue (g/cm$^3$) | 3,97 | 3,77 | 3,90 | 3,88 | 4,03 | 3,97 | 3,94 | 4,08 | 4,06 | 4,34 | 3,85 | 3,92 | 3,77 | 3,77 | 3,78 | 3,83 |
| Porosité totale (%) | 82,4 | 81,4 | 82,3 | 82,7 | 79,9 | 89,2 | 89,3 | 79,7 | 81,5 | 81,3 | 81,0 | 79,1 | 79,3 | 81,4 | 86,2 | 78,9 |
| MoR 4 points, à 20°C (MPa) | 3,7 | 2,3 | 3,4 | 3,3 | 2,9 | 0,9 | 0,75 | 2,85 | 2,1 | 2,6 | 2,6 | 3,8 | 2,7 | 3,3 | 1,2 | 3,7 |
| MoR * 1000 / MOE | 378 | 348 | 415 | 413 | 432 | 377 | 412 | 425 | 407 | 371 | 419 | 518 | 474 | 471 | 447 | 496 |
| Perte MoR (%) après choc thermique | 78 | 68 | 79 | 76 | 66 | NM | NM | 67 | 71 | 73 | 69 | 55 | 59 | 61 | 64 | 62 |
| MoR 3 points à 1400°C (MPa) | 0,9 | 1,2 | NM | NM | 2,9 | NM | NM | NM | NM | NM | NM | 2,9 | 3,0 | NM | 1,1 | 4,1 |
| Conductivité thermique à 1200°C [W / (m * K)] | 0,90 | 0,80 | NM | NM | 0,65 | 0,72 | 0,73 | 0,64 | NM | 0,63 | NM | NM | 0,58 | 0,61 | 0,54 | NM |
| NM : non mesuré | | | | | | | | | | | | | | | | |

Les résultats mettent en évidence une amélioration de la tenue aux chocs thermiques, de la tenue au gradient thermique, de résistance mécanique à chaud, avec une conductivité thermique faible à haute température, quels que soient les précurseurs ajoutés pour former les phases de mullite et de zircone.

Les exemples 2 et 5 sont les exemples préférés.

Comme cela apparaît clairement à présent, la composition de phases d'une mousse céramique selon l'invention permet d'améliorer la tenue au cyclage thermique, et plus généralement aux gradients thermiques, le rapport MoR * 1000 / MoE pouvant dépasser 440, 470, 500, voire 515.

En outre, une mousse céramique présente encore :

- un module de rupture en flexion quatre points (MoR) très élevé à 20°C, qui peut être supérieur à 2,5 MPa, voire 3,5 MPa pour un volume poreux de 80% environ ;
- un module de rupture en flexion trois points (MoR) très élevé à 1400°C, qui peut être supérieur à 3,0 MPa, voire 4,0 MPa pour un volume poreux de 80% environ ;
- une faible conductivité thermique à haute température (à 1200°C), qui peut être inférieure à 0,8 W/(m.K), et même inférieure à 0,6 W/(m*K) ;
- une résistance aux chocs thermiques améliorée, la perte de MoR 4 points suite au traitement thermique pouvant être inférieure à 65%, à 60%, et même inférieure à 55% ;

Une mousse céramique selon l'invention présente par ailleurs une porosité totale élevée, de préférence supérieure à 79%, voire supérieure à 82%. De préférence, la porosité totale est inférieure à 85%. Au-delà de 85%, le module de rupture de flexion 4 points diminue en effet très sensiblement.

Une mousse céramique selon l'invention est donc parfaitement adaptée pour servir d'isolant thermique dans un four.

Enfin, avantageusement, une mousse céramique selon l'invention peut être fabriquée par moussage direct. Ce procédé permet avantageusement de fabriquer, par coulage, des pièces de formes variées et/ou d'épaisseur supérieure à 50mm.

Bien entendu, l'invention n'est cependant pas limitée aux modes de réalisation décrits, fournis à des fins illustratives uniquement.

## Revendications

1. Mousse céramique frittée présentant une porosité totale supérieure à 60% en volume et la composition de phases suivante, en pourcentages massiques sur la base des phases cristallisées :

   - 25 à 55% de mullite,
   - 20 à 65% de corindon,
   - 10 à 40% de zircone,

   la mullite, le corindon et la zircone représentant ensemble plus de 80% de la masse des phases cristallisées.

2. Mousse céramique selon la revendication précédente, présentant une porosité totale comprise entre 65% et 95%.

3. Mousse céramique selon l'une quelconque des revendications précédentes, dans laquelle la mullite, le corindon et la zircone représentent ensemble plus de 95% de la masse des phases cristallisées.

4. Mousse céramique selon l'une quelconque des revendications précédentes, dans laquelle la teneur en mullite est supérieure à 35% et inférieure à 50%.

5. Mousse céramique selon l'une quelconque des revendications précédentes, dans laquelle la teneur en mullite est supérieure à 40%.

6. Mousse céramique selon l'une quelconque des revendications précédentes, dans laquelle la teneur en corindon est supérieure à 25% et inférieure 50%.

7. Mousse céramique selon la revendication immédiatement précédente, dans laquelle la teneur en corindon est supérieure à 30% et inférieure 40%.

**8.** Mousse céramique selon l'une quelconque des revendications précédentes, dans laquelle la teneur en zircone est supérieure à 15% et inférieure 35%.

**9.** Mousse céramique selon la revendication immédiatement précédente, dans laquelle la teneur en zircone est supérieure à 20% et inférieure 30%.

**10.** Mousse céramique selon l'une quelconque des revendications précédentes, dans laquelle plus de 60% de la zircone, en pourcentage massique, est sous forme cristalline monoclinique.

**11.** Mousse céramique selon l'une quelconque des revendications précédentes, présentant une composition chimique telle que, en pourcentages massiques sur la base des oxydes et pour un total de 100% :

- $Al_2O_3$ : 50 à 80% ;
- $SiO_2$ : 5 à 25% ;
- $ZrO_2$: 10 à 40% ;
- $Fe_2O_3$ + MnO + $B_2O_3$ + $Na_2O$ + $K_2O$: moins de 2% ;
- CaO + MgO + $Y_2O_3$ + $Ce_2O_3$ : moins de 10% ;
- Autres oxydes réfractaires : Complément à 100%.

**12.** Mousse céramique selon la revendication immédiatement précédente, dans laquelle :

- CaO + MgO + $Y_2O_3$ + $Ce_2O_3$ : moins de 3%.

**13.** Four comportant un isolant thermique comportant une mousse céramique selon l'une quelconque des revendications précédentes.

**14.** Procédé de fabrication d'une mousse céramique selon l'une quelconque des revendications 1 à 12, ledit procédé comportant les étapes suivantes :

A. Préparation d'un premier mélange comportant :

- des particules d'oxydes réfractaires choisies de manière à obtenir, à l'issue de l'étape F., une mousse céramique selon l'une quelconque des revendications 1 à 12, les particules d'oxydes réfractaires représentant plus de 50% en masse du premier mélange ;
- un liquide contenant un agent mouillant et/ou un dispersant ;

B. Indépendamment de l'étape A., préparation d'un deuxième mélange, comportant

- un agent gélifiant,
- un agent moussant, et
- de préférence un plastifiant ;

C. Incorporation des premier et deuxième mélanges dans un réacteur thermostaté et moussage par agitation mécanique, de manière à obtenir un mélange mousseux ;
D. Coulage du mélange mousseux dans un moule à une température inférieure à 40°C ;
E. Séchage de la préforme, afin d'obtenir une préforme présentant une teneur résiduelle en eau inférieure à 1,5% ;
F. Frittage sous atmosphère oxydante.

**15.** Procédé de fabrication selon la revendication 14, dans lequel :

- à l'étape A., le premier mélange est constitué d'un mélange :

- de dites particules d'oxydes réfractaires et
- dudit liquide ;

- à l'étape B., le deuxième mélange est constitué

- de gélatine ou d'un dérivé de gélatine,
- d'un agent moussant, et
- de préférence de glycérine ou d'un dérivé de glycérine ;

- à l'étape C., l'agitation mécanique dure plus de 10 minutes ;
- à l'étape D., le mélange mousseux est coulé à une température inférieure à 30°C ;
- à l'étape F., le frittage est réalisé sous air, à une température supérieure à 1600°C et inférieure à 1750°C, pendant une durée supérieure à 2 heures.

**Patentansprüche**

1. Gesinterter Keramikschaum, der eine volumenbezogene Gesamtporosität von mehr als 60 % und die folgende Phasenzusammensetzung in Massenprozent auf der Grundlage der kristallisierten Phasen aufweist:

   - 25 bis 55 % Mullit,
   - 20 bis 65 % Korund,
   - 10 bis 40 % Zirkon,

   wobei der Mullit, der Korund und der Zirkon zusammen mehr als 80 % der Masse der kristallisierten Phasen ausmachen.

2. Keramikschaum nach dem vorhergehenden Anspruch, der eine Gesamtporosität zwischen 65 % und 95 % aufweist.

3. Keramikschaum nach einem der vorhergehenden Ansprüche, bei dem der Mullit, der Korund und der Zirkon zusammen mehr als 95 % der Masse der kristallisierten Phasen ausmachen.

4. Keramikschaum nach einem der vorhergehenden Ansprüche, bei dem der Mullitgehalt mehr als 35 % und weniger als 50 % beträgt.

5. Keramikschaum nach einem der vorhergehenden Ansprüche, bei dem der Mullitgehalt mehr als 40 % beträgt.

6. Keramikschaum nach einem der vorhergehenden Ansprüche, bei dem der Korundgehalt mehr als 25 % und weniger als 50 % beträgt.

7. Keramikschaum nach dem unmittelbar vorhergehenden Anspruch, bei dem der Korundgehalt mehr als 30 % und weniger als 40 % beträgt.

8. Keramikschaum nach einem der vorhergehenden Ansprüche, bei dem der Zirkongehalt mehr als 15 % und weniger als 35 % beträgt.

9. Keramikschaum nach dem unmittelbar vorhergehenden Anspruch, bei dem der Zirkongehalt mehr als 20 % und weniger als 30 % beträgt.

10. Keramikschaum nach einem der vorhergehenden Ansprüche, bei dem mehr als 60 % des Zirkons, in Massenprozent, in monokliner kristalliner Form vorliegt.

11. Keramikschaum nach einem der vorhergehenden Ansprüche, der eine derartige chemische Zusammensetzung, in Massenprozent auf der Grundlage der Oxide und bei einer Summe von 100 %, aufweist, dass:

    - $Al_2O_3$: 50 bis 80 %;
    - $SiO_2$ : 5 bis 25 %;
    - $ZrO_2$: 10 bis 40 %;
    - $Fe_2O_3$+ MnO + $B_2O_3$ + $Na_2O$ + $K_2O$: weniger als 2 %;
    - CaO + MgO + $Y_2O_3$ + $Ce_2O_3$: weniger als 10 %;
    - sonstige feuerfeste Oxide: zu 100 % fehlender Anteil.

12. Keramikschaum nach dem unmittelbar vorhergehenden Anspruch, bei dem:

- CaO + MgO + $Y_2O_3$ + $Ce_2O_3$: weniger als 3 %.

**13.** Ofen mit einer Wärmeisolierung, die einen Keramikschaum nach einem der vorhergehenden Ansprüche umfasst.

**14.** Verfahren zur Herstellung eines Keramikschaums nach einem der Ansprüche 1 bis 12, wobei das Verfahren die folgenden Schritte umfasst:

A. Zubereiten eines ersten Gemisches, das umfasst:

- Partikel von feuerfesten Oxiden, die so gewählt sind, dass nach Schritt F ein Keramikschaum nach einem der Ansprüche 1 bis 12 erhalten wird, wobei die Partikel von feuerfesten Oxiden mehr als 50 Gew.-% des ersten Gemisches ausmachen;
- eine Flüssigkeit, die ein Netzmittel und/oder ein Dispergiermittel enthält;

B. Unabhängig von Schritt A Zubereiten eines zweiten Gemisches, das umfasst

- einen Gelbildner,
- einen Schaumbildner und
- bevorzugt ein Plastifizierungsmittel;

C. Einbringen des ersten und zweiten Gemisches in einen temperierbaren Reaktor und Schäumen durch mechanisches Rühren, so dass ein schaumiges Gemisch erhalten wird;
D. Gießen des schaumigen Gemisches in eine Form bei einer Temperatur von weniger als 40 °C;
E. Trocknen des Vorformlings, um einen Vorformling zu erhalten, der einen Restgehalt an Wasser von weniger als 1,5 % aufweist;
F. Sintern unter oxidierender Atmosphäre.

**15.** Herstellungsverfahren nach Anspruch 14, bei dem:

- in Schritt A das erste Gemisch aus einem Gemisch besteht aus :

- den genannten Partikeln von feuerfesten Oxiden und
- der genannten Flüssigkeit;

- in Schritt B das zweite Gemisch besteht aus

- Gelatine oder einem Gelatinederivat,
- einem Schaumbildner und
- bevorzugt Glycerin oder einem Glycerinderivat;

- in Schritt C das mechanische Rühren länger als 10 Minuten dauert;
- in Schritt D das schaumige Gemisch mit einer Temperatur von weniger als 30 °C gegossen wird;
- in Schritt F das Sintern unter Luft bei einer Temperatur von mehr als 1600 °C und weniger als 1750 °C während einer Dauer von mehr als 2 Stunden erfolgt.

**Claims**

**1.** A sintered ceramic foam having a total porosity of greater than 60% by volume and the following phase composition, in mass percent based on the crystallized phases:

- 25 to 55% mullite,
- 20 to 65% corundum,
- 10 to 40% zirconia,

mullite, corundum and zirconia together representing more than 80% of the mass of the crystallized phases.

**2.** The ceramic foam as claimed in the preceding claim, having a total porosity of between 65% and 95%.

3. The ceramic foam as claimed in any one of the preceding claims, wherein mullite, corundum and zirconia together represent more than 95% of the mass of the crystallized phases.

4. The ceramic foam as claimed in any one of the preceding claims, wherein the mullite content is greater than 35% and less than 50%.

5. The ceramic foam as claimed in any one of the preceding claims, wherein the mullite content is greater than 40%.

6. The ceramic foam as claimed in any one of the preceding claims, wherein the corundum content is greater than 25% and less than 50%.

7. The ceramic foam as claimed in the immediately preceding claim, wherein the corundum content is greater than 30% and less than 40%.

8. The ceramic foam as claimed in any one of the preceding claims, wherein the zirconia content is greater than 15% and less than 35%.

9. The ceramic foam as claimed in the immediately preceding claim, wherein the zirconia content is greater than 20% and less than 30%.

10. The ceramic foam as claimed in any one of the preceding claims, wherein more than 60% of the zirconia, by mass percent, is in monoclinic crystalline form.

11. The ceramic foam as claimed in any one of the preceding claims, having a chemical composition such that, in mass percentages based on the oxides and for a total of 100%:

- $Al_2O_3$: 50 to 80%;
- $SiO_2$ : 5 to 25%;
- $ZrO_2$: 10 to 40%;
- $Fe_2O_3$ + MnO + $B_2O_3$+ $Na_2O$ + $K_2O$: less than 2%;
- CaO + MgO + $Y_2O_3$ + $Ce_2O_3$: less than 10%;
- Other refractory oxides : supplement to 100%.

12. The ceramic foam as claimed in the immediately preceding claim, wherein:

- CaO + MgO + $Y_2O_3$ + $Ce_2O_3$: less than 3%.

13. A furnace having a thermal insulator comprising a ceramic foam as claimed in any one of the preceding claims.

14. A process for manufacturing a ceramic foam according to any one of claims 1 to 12, said process comprising the following steps:

A. Preparing a first mixture comprising a mixture of:

- refractory oxide particles selected so as to obtain, at the end of step F., a ceramic foam according to any one of claims 1 to 12, the refractory oxide particles representing more than 50% by mass of the first mixture;
- a liquid containing a wetting agent and/or a dispersant;

B. Independently of step A., preparing a second mixture, comprising

- a gelling agent,
- a foaming agent, and
- preferably a plasticizer;

C. Incorporating the first and second mixtures in a thermostatically controlled reactor and foaming by mechanical stirring, so as to obtain a foamed mixture;
D. Pouring the foam mixture into a mold at a temperature below 40°C;
E. Drying the preform, in order to obtain a preform having a residual water content of less than 1.5%;

F. Sintering in an oxidizing atmosphere.

**15.** A process according to claim 14, in which:

- At step A., the first mixture consists of a mixture of:

    - said refractory oxide particles;
    - said liquid.

- at step B., the second mixture consists of:

    - gelatin or a gelatin derivative,
    - a foaming agent, and
    - preferably glycerin or a glycerin derivative;

- at step C., the mechanical stirring lasts more than 10 minutes;
- at step D., the foam mixture is poured at a temperature below 30°C;
- at step F., the sintering is in air, at a temperature above 1600°C and below 1750°C, for a period of more than 2 hours.

10
12
17

Fig. 1

NL          x100          1 mm

18

12

19

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1140731 B1
- US 4024212 A
- WO 0069542 A
- US 5643512 A
- US 5705448 A
- EP 1329439 A1
- WO 2006018537 A
- EP 1945593 A1
- US 2009197756 A
- US 8044105 B2
- CN 105837241
- EP 1329439 A

**Littérature non-brevet citée dans la description**

- **BRAM NEIRINCK et al.** Production of porous materials through consolidation of pickering emulsions. *Advanced engineering materials,* 2007, vol. 9 (1-2
- **G. ALIPRANDI.** Matériaux réfractaires et céramiques techniques (éléments de céramurgie et de technologie). 1979